# EUROPÄISCHE PATENTSCHRIFT

(11) **EP 0 813 035 B1**
(45) Veröffentlichungstag und Bekanntmachung des Hinweises auf die Patenterteilung: **01.08.2001**
(21) Anmeldenummer: 97107411.7
(22) Anmeldetag: 06.05.1997
(51) Int. Cl.: F27B 7/24

(54) **Dichtung für Drehrohre**
Seal for rotary drum
Joint pour tambour rotatif

(30) Priorität: 13.06.1996 DE 19623577
(43) Veröffentlichungstag der Anmeldung: 17.12.1997
(73) Patentinhaber: Noell-KRC Energie- und Umwelttechnik GmbH, 04435 Schkeuditz (DE)
(72) Erfinder: Kuhn, Rolf, 97080 Würzburg (DE); Mayer, Hanns Günther, Dr., 97209 Veitshöchheim (DE)
(74) Vertreter: Lüdtke, Frank, Dipl.-Ing.

(56) Entgegenhaltungen:
- EP-A- 0 357 939
- DE-A- 3 008 741
- GB-A- 2 094 906
- ZEMENT KALK GIPS, Nr. 5, 1971, XP002036664 B.BIEGEL: "abdichtungen für drehöfen"

## Beschreibung

Die Erfindung betrifft eine Dichtung für Drehrohre entsprechend dem erstem Teil des Anspruchs 1 (GB 2094906 A).

Die Erfindung ist geeignet zur Abdichtung von Drehrohrtrommeleinrichtungen, wie sie bei Öfen zur Verbrennung, Thermolyse und Pyrolyse oder ähnlichen Verfahren Anwendung findet.

Zwischen der drehenden Trommel sowie den ortsfesten Ein- und Auslaufgehäusen sind Dichtungen zur gasdichten Trennung erforderlich. Diese Dichtungen müssen für Temperaturen oberhalb von 750 Grad geeignet sein, Verformungen an den Strukturen der Bauteile der Dichtung durch Wärmeeinwirkungen, die die Dichtung unwirksam werden lassen, müssen vermieden werden. Weiterhin müssen die Dichtungen abrasiven Gasen, dem Angriff durch abrasive feste Teilchen und harzenden Ölen und Teeren und dem damit verbundenen Verschleiß standhalten. Außerdem steht für diese Dichtungen die Forderung, daß hohe Standzeit mit geringem Wartungsaufwand zu realisieren sind.

Nach dem Stand der Technik ist es auch an Drehtrommeln üblich, in Nuten eingelegte, elastische Elemente (Packungsschnüre) oder nach diesem Prinzip funktionierende Dichtungen zu verwenden. Diese haben den Nachteil, daß es durch Verkleben mit harzenden Produkten zum Versagen der Dichtung kommt. Weiterhin kann es zur Verbackung auf den Dichtflächen kommen, so daß die Dichtheit nicht mehr gewährleistet ist. Bei allen bekannten Lösungen ist ein hoher Wartungs- und Austauschaufwand der Dichtelemente erforderlich.

Aus DE 43 31 556 A1 geht eine Gleitringdichtung zum Abdichten eines heißen Rohres gegen ein Gehäuse hervor, bei der der Dichtring über eine Dose mit zentraler Öffnung am Rohr befestigt ist. Diese Dose hat den Zweck, die Temperatur an dem Gleitring bzw. der Dichtstelle herabzusetzen, wobei für diese Gleitringdichtung ein Schmiersystem vorzusehen ist.

Abgesehen von diesem Nachteil erfordert diese Lösung ein großes Bauvolumen, wobei eine Erwärmung der Dichtstellen nicht völlig verhindert werden kann. Diese Erwärmung birgt die Gefahr, daß die zumeist großen Ringe sich durch Erwärmung verziehen und Undichtheiten entstehen, was bei linienförmig aufgebrachten Kräften von Gleitringen allgemein der Fall ist.

Auch DE-AS 1 226 377 zeigt eine Gleitringdichtung, die als drehbare Rohrkopplung zwischen einem elektrischen Vakuum-Schmelzofen mit einer Vakuumkammer ausgeführt ist. Diese Gleitringdichtung läßt einen Wellenversatz zu, da der Gleitring eine ausgleichende elastische Komponente aufweist. Damit werden aber die genannten Nachteile des Standes der Technik nicht gelöst.

Es ist daher Aufgabe der Erfindung, eine wartungsfreie Dichtung mit hoher Lebensdauer zu entwickeln, die thermischen, chemischen und mechanischen Angriffen weitestgehend widersteht.

Diese Aufgabe wird durch die kennzeichnenden Merkmale des ersten Patentanspruches gelöst. Vorteilhafte Weiterbildungen der Erfindung sind in den Unteransprüchen genannt.

Die erfindungsgemäße Lösung sieht vor, daß eine metallisch elastische Dichtung spaltfrei und somit dichtend an ihre Dichtflächen angepaßt wird. Die metallische Gleitringdichtung bildet bei einer richtigen Materialauswahl, die vom entsprechenden Fachmann getroffen wird, eine elastische Konstruktion, die allen Anforderungen an Dichtungen für Drehrohre, die thermisch, chemisch und mechanisch belastet werden, bei hoher Lebensdauer und ohne Wartung gerecht wird.

Die erfindungsgemäße Dichtung ist so ausgebildet, daß auf einer in Dichtung elastischen, quer dazu relativ steifen Scheibe Gleitsegmente aus Metall angeordnet sind. Diese Scheibe mit ihren austauschbaren Gleitsegmenten wird durch eine Anzahl von Federn, die der Steifigkeit und Dichtanpressung gemäß ausgelegt sind, spaltfrei an ihre Dichtfläche angdrückt. Sie paßt sich dadurch der Dichtfläche an, auch wenn diese in gewissem Umfang verformt, wellig oder kegelförmig, zum Beispiel durch Wärmeeinwirkung, verzogen ist.

Die Scheibe, die den Dichtungsträger darstellt, wird durch mehrere, drei, am Umfang verteilte Lenker gehalten, die als Drehmomentstütze wirken und die Scheibe in ihrer, beispielsweise leicht exzentrischen Lage halten, jedoch eine freie Bewegung in Richtung der Dichtebene gewährleisten, so daß eine Federwirkung entstehen kann und ein selbsttätiges Nachstellen bei Verschleiß gegeben ist. Mit den Lenkern ist die Dichtung so einstellbar, daß eine "eiernde" Bewegung zur Selbstreinigung der Dichtfläche entsteht. Dadurch wird auch das Einlaufen der Dichtung vermieden. Die Lenker sind an einer Tragkonstruktion befestigt, wobei sich als vorteilhaft erwiesen hat, die Lenker mit Rollen an der Dichtscheibe zu zentrieren.

Weiterhin hat es sich als vorteilhaft erwiesen, den in Achsrichtung beweglichen Dichtungsträger mit einem Kompensator abdichtend mit der Konstruktion, die durch das Dichtungsgehäuse gebildet werden kann, zu verbinden.

Anhand von zwei schematischen Darstellungen soll die Erfindung näher erläutert werden.

Die Figuren zeigen:
- Figur 1: einen halben Längsschnitt der Drehrohrachse mit der Dichtanordnung als Doppeldichtung dargestellt, die mit einem Sperrmedium beaufschlagt werden kann,
- Figur 2: Ansicht der Dichtung mit dem als Dichtungsträger wirkenden Lenker

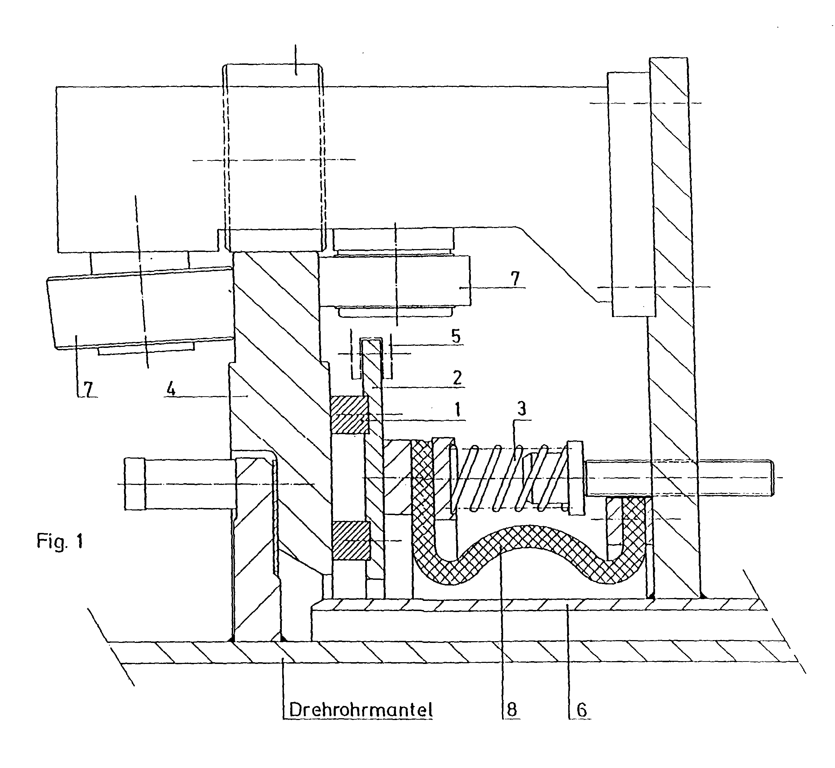

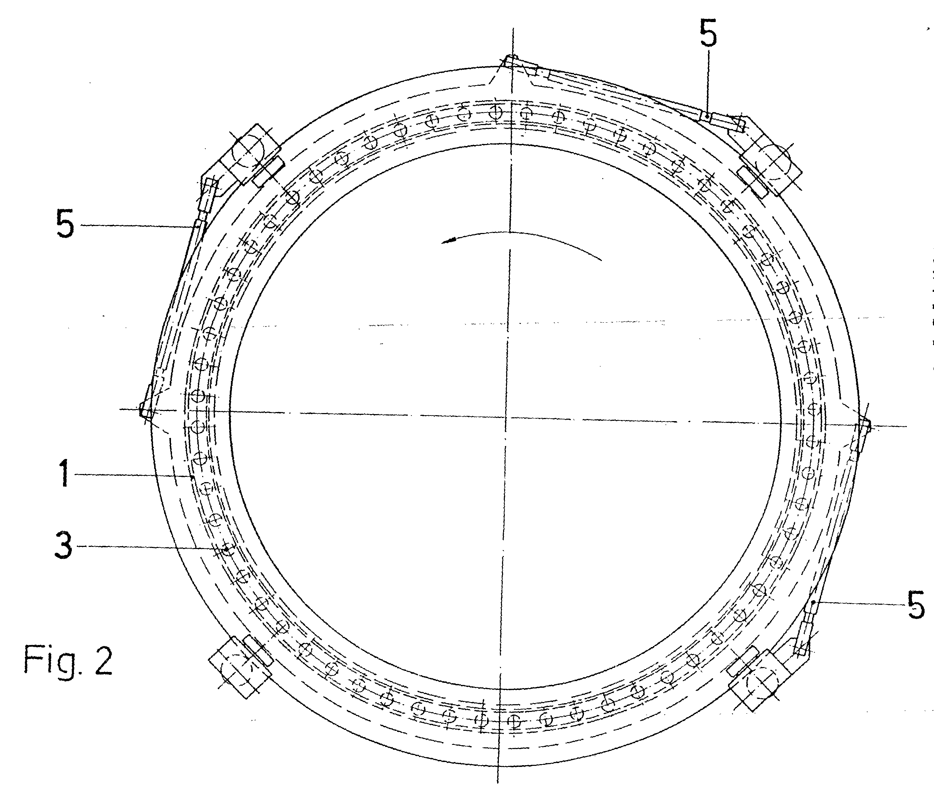

Die Figur 1 zeigt eine Drehrohrtrommel mit der erfindungsgemäßen Dichtung, bestehend aus metallischen Gleitsteinen 1, dem elastischen Dichtungsträger 2, auf den die Feder 3 wirkt, wobei der Dichtungsträger 3 mittels dem Kompensator 8 gegenüber dem Dichtungsgehäuse 6 mittels einem Kompensator 8 abgedichtet ist. Die metallischen Gleitsteine 1 werden spaltfrei an die rotierende Dichtfläche 4 angepreßt. Das Zentrieren des Dichtungsgehäuses 6 gegenüber der rotierenden Dichtfläche 4 erfolgt mittels Rollen 7. Die Figur 2 zeigt eine Ansicht der erfindungsgemäßen Lösung mit Gleitsteinen 1 und Federn 3, die über den Umfang der Drehtrommel angeordnet sind, wobei drei Lenker 5 so an der Tragkonstruktion befestigt sind, daß der Dichtungsträger 3 zentrisch in Umfangsrichtung gehalten wird, jedoch in Achsrichtung frei beweglich ist.

## Patentansprüche

1. Dichtung für Drehtrommel, wobei metallische Gleitsteine (1) mit einem metallischen, in Achsrichtung elastischen Dichtträger (2) angeordnet sind, die von einer Anzahl Federn (3) spaltfrei an eine rotierende Dichtfläche (4) angepreßt werden, und das Dichtungsgehäuse (6) durch Rollen (7) an der rotierenden Dichtfläche (4) zentriert ist, dadurch gekennzeichnet, daß
- der Dichtungsträger (2) durch drei Lenker (5) zentrisch und in Umfangrichtung gehalten wird, jedoch in Arbeitsrichtung frei beweglich ist

2. Dichtung nach Anspruch 1, dadurch gekennzeichnet, daß die Dichtungsträger (2) mittels einem Kompensator (8) gegenüber dem Dichtgehäuse (6) abgedichtet sind.

## Claims

1. Seal for a rotary drum, wherein metallic slide rings (1) are each provided with a metallic seal carrier (2), which is resilient when viewed with respect to the axial direction, said carriers being pressed against a rotating sealing surface (4) by a number of springs (3) in a clearance-free manner, and the seal housing (6) is centred on the rotating sealing surface (4) by rollers (7), characterised in that the seal carrier (2) is retained centrally and in the circumferential direction by three guide rods (5), but it is freely displaceable in the operating direction.

2. Seal according to claim 1, characterised in that the seal carriers (2) are sealed from the seal housing (6) by means of a compensator (8).

## Revendications

1. Garniture d'étanchéité pour tambours rotatifs, dans laquelle sont disposés des coulisseaux métalliques (1) munis d'un support de garniture (2) métallique, élastique dans la direction axiale, et sont pressés sans jeu par un certain nombre de ressorts (3) contre une surface d'étanchéité (4) en rotation, et le boîtier d'étanchéité (6) est centré par des rouleaux (7) sur la surface d'étanchéité (4) en rotation, caractérisée en ce que le support de garniture (2) est maintenu de façon centrée et dans la direction périphérique par trois bras oscillants (5), mais est librement mobile dans la direction de travail.

2. Garniture d'étanchéité suivant la revendication 1, caractérisée en ce que le support de garniture (2) est étanchéifié par rapport au boîtier d'étanchéité (6) au moyen d'un compensateur (8).
